# EUROPEAN PATENT APPLICATION

(11) **EP 4 834 714 A1**
(43) Date of publication of application: **04.11.2026**
(21) Application number: 24935227.9
(22) Date of filing: 19.04.2024
(51) Int. Cl.: B62D 5/04, H02K 11/25, H02K 9/19, H02P 29/60

(54) **LIQUID IMMERSION COOLING APPARATUS FOR MOTOR-DRIVEN POWER STEERING SYSTEM OF VEHICLE**

(30) Priority: 09.04.2024 KR 20240047908
(71) Applicant: Industry-Academy Cooperation Foundation, Halla University, Wonju-si Gangwon-do 26404 (KR)
(72) Inventor: MIN, Youngjae, Hwaseong-si Gyeonggi-do 18482 (KR)
(74) Representative: Danubia Patent & Law Office LLC
(86) International application number: PCT/KR2024/005308
(87) International publication number: WO 2025/216349

(57) **Abstract**

The present invention relates to a liquid immersion cooling apparatus for a motor-driven power steering system of a vehicle, the apparatus having a circulation pump controller that drives an immersion refrigerant circulation pump so as to circulate an immersion refrigerant if it is determined that an electric steering motor driving value exceeds a motor heating threshold value, so that the immersion refrigerant comes into direct contact with a motor driving element (for example, an FET) of a motor driver mounted on a circuit board constituting a steering controller immersed in a liquid immersion tank, and thus heat from the corresponding motor driving element (for example, the FET) is dissipated.

## Description

### [Technical Field]

The present invention relates to a motor-driven power steering system, and more particularly, to a liquid immersion cooling apparatus for a motor-driven power steering system.

### [Background Art]

A motor-driven power steering system for a vehicle controls electricity supplied from a battery of the vehicle using a steering controller to generate an assist force that assists a steering force that is required when a driver steers a handwheel.

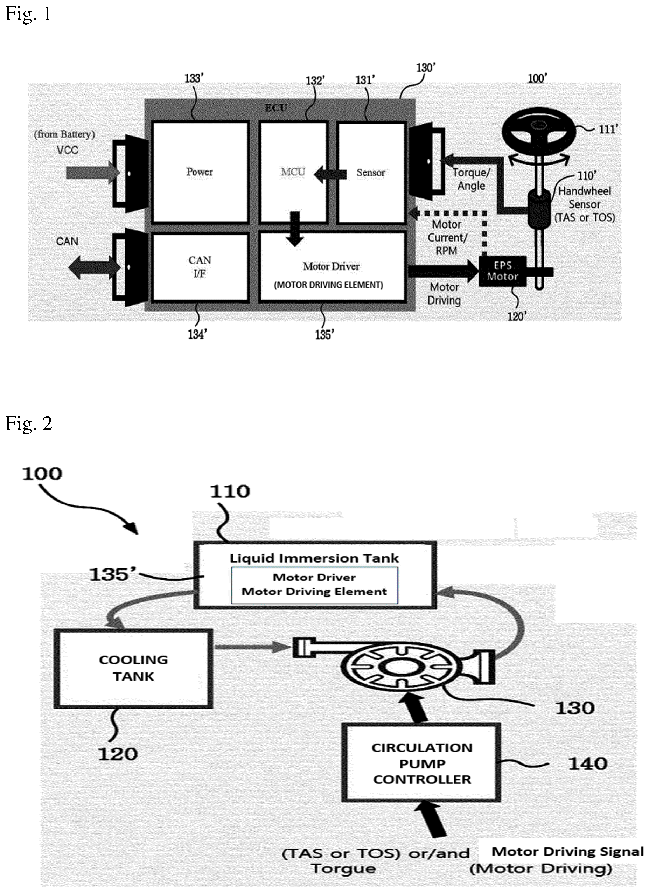

FIG. 1 is an embodiment illustrating a typical motor-driven power steering system 100' for a vehicle.

The typical motor-driven power steering system 100' for a vehicle illustrated in FIG. 1 is formed to include a handwheel sensor 110', an electric steering motor 120', and a steering controller 130'.

The handwheel sensor 110' is formed as a torque only sensor (TOS) that detects only a handwheel torque when a steering angle of the handwheel 111' is adjusted by the driver or is formed as a torque and angle sensor (TAS) that detects both the steering angle and the handwheel torque.

The electric steering motor 120' is driven by a driving signal for adjusting a motor current and generates an assist force for rotationally operating the handwheel 111'.

When the steering controller 130' receives a vehicle speed signal, the handwheel torque detected by the handwheel sensor 110' or both the steering angle and the handwheel torque, and a motor current signal or a motor revolutions per minute (RPM) signal detected from the electric steering motor 120', the steering controller 130' outputs a driving signal for adjusting a motor current applied to the electric steering motor 120' based on a handwheel torque value and a motor current value that are classified in advance for steering angle adjustment according to a vehicle speed range.

The steering controller 130' is an electronic control unit (ECU) for steering control, and is formed as a circuit board on which a sensor 131', a microcontroller unit (MCU) 132', a power connector (POWER) 133', a controller area network (CAN) communication interface (CAN I/F) 134', and a motor driver 135' are mounted.

The sensor 131' senses a detection signal of the handwheel sensor 110' and a motor current signal or a motor RPM signal detected from the electric steering motor 120'.

The MCU 132' outputs a motor current adjustment signal applied to the electric steering motor 120' based on the handwheel torque value and the motor current value that are classified in advance for steering angle adjustment according to the above-described vehicle speed range.

The power connector 133' receives driving power (VCC) supplied from a battery of the vehicle.

The CAN communication interface 134' receives a vehicle speed signal required for steering control through vehicle CAN communication.

The motor driver 135' is formed to include a motor driving element, for example, a field effect transistor (FET), that converts electricity supplied from the battery of the vehicle into a low-voltage/high-current driving signal and outputs the driving signal according to an input of the motor current adjustment signal of the MCU 132', and is mounted on the circuit board that forms the steering controller 130'.

In the conventional motor-driven power steering system 100' for a vehicle that is formed as described above, when the steering controller 130' outputs a driving signal for adjusting a motor current as described above, the electric steering motor 120' is driven to generate an assist force for rotationally operating the handwheel 111', and the assist force thus generated allows wheels of the vehicle to be easily steered according to an intent of the driver.

Meanwhile, particularly because the motor driving element (for example, an FET) mounted on the circuit board forming the steering controller 130' overheats when the motor driver 135' converts electricity supplied from the battery of the vehicle into a low-voltage/high-current driving signal and outputs the driving signal according to an input of a motor current adjustment signal of the MCU 132' and the electric steering motor 120' is driven, an air-cooled heat dissipation technology that uses a heating plate for preventing overheating of the motor driving element (for example, the FET) mounted on the circuit board (see Patent Document 1 (KR 10-1511596 B1)), an indirect liquid-cooled heat dissipation technology that uses a heat pipe formed with a fluid-filled pipe body as a heat exchange means of the circuit board (see Patent Document 2 (KR 10-1374947 B1)), and the like have conventionally been developed.

However, the air-cooled heat dissipation technology that uses the heating plate has implementation and cost problems in that heat dissipation efficiency increases in proportion to a heat dissipation area and a material having excellent thermal conductivity needs to be provided, and the indirect liquid-cooled heat dissipation technology has an advantage of relatively superior heat dissipation performance compared to the air-cooled heat dissipation technology using the heating plate but has a limitation in increasing heat dissipation performance because heat dissipation is not performed by direct contact with the motor driving element (for example, the FET) of the motor driver 135' mounted on the circuit board.

### [Disclosure]

### [Technical Problem]

In order to solve the conventional problems that are described above, the present invention is directed to providing a liquid immersion cooling apparatus for a motor-driven power steering system of a vehicle, in which, when it is determined that an electric steering motor driving value exceeds a motor heating threshold value, a circulation pump controller drives an immersion refrigerant circulation pump to circulate an immersion refrigerant, brings the immersion refrigerant into direct contact with a motor driving element (for example, an FET) of a motor driver mounted on a circuit board that forms a steering controller immersed in a liquid immersion tank, and thus performs heat dissipation for the motor driving element (for example, the FET).

### [Technical Solution]

In order to achieve the above object of the present invention, a liquid immersion cooling apparatus for a motor-driven power steering system of a vehicle according to the present invention is used for the motor-driven power steering system of the vehicle, which includes: a handwheel sensor formed as a TOS that detects only a handwheel torque when a steering angle of a handwheel is adjusted by a driver or formed as a TAS that detects both the steering angle and the handwheel torque; an electric steering motor that is driven by a driving signal for adjusting a motor current and generates an assist force for rotationally operating the handwheel; and a steering controller that outputs a driving signal for adjusting the motor current applied to the electric steering motor based on a handwheel torque value and a motor current value that are classified in advance for steering angle adjustment according to a vehicle speed range, upon receiving a vehicle speed signal, the handwheel torque detected by the handwheel sensor or both the steering angle and the handwheel torque, and a motor current signal or a motor RPM signal detected from the electric steering motor, wherein the liquid immersion cooling apparatus immerses a motor driver mounted on a circuit board forming the steering controller in a liquid immersion tank and circulates an immersion refrigerant contained in a cooling tank by operating an immersion refrigerant circulation pump, and wherein as a result of matching and comparing an electric steering motor driving value that is calculated using the handwheel torque detected from the handwheel sensor and an electric steering motor driving value that is calculated using the driving signal applied to the electric steering motor with predetermined motor heating values, when it is determined that the electric steering motor driving value exceeds a motor heating threshold value, a circulation pump controller drives the immersion refrigerant circulation pump to circulate the refrigerant, brings the immersion refrigerant into direct contact with a motor driving element (for example, an FET) of the motor driver immersed in the liquid immersion tank, and thus performs heat dissipation for the motor driving element (for example, the FET).

In the liquid immersion cooling apparatus for the motor-driven power steering system of the vehicle according to the present invention, the circulation pump controller drives an immersion refrigerant circulation pump 130 to circulate the refrigerant when it is determined, as a result of matching and comparing only the electric steering motor driving value that is calculated using the handwheel torque detected from the handwheel sensor with the predetermined motor heating values, that the electric steering motor driving value exceeds the motor heating threshold value.

In the liquid immersion cooling apparatus for the motor-driven power steering system of the vehicle according to the present invention, the circulation pump controller drives the immersion refrigerant circulation pump to circulate the refrigerant when it is determined, as a result of matching and comparing only the electric steering motor driving value that is calculated using the driving signal applied to the electric steering motor with the predetermined motor heating values, that the electric steering motor driving value exceeds the motor heating threshold value.

In the liquid immersion cooling apparatus for the motor-driven power steering system of the vehicle according to the present invention, the circulation pump controller calculates the electric steering motor driving value by measuring a PWM signal pulse width of the driving signal applied to the electric steering motor.

In the liquid immersion cooling apparatus for the motor-driven power steering system of the vehicle according to the present invention, the circulation pump controller is mounted on a circuit board that forms the steering controller as an ECU for steering control.

In the liquid immersion cooling apparatus for the motor-driven power steering system of the vehicle according to the present invention, the circulation pump controller is mounted on an independent circuit board different from the circuit board that forms the steering controller as the ECU for steering control.

### [Advantageous Effects]

According to the present invention, because an immersion refrigerant comes into direct contact with a motor driving element (for example, an FET) of a motor driver and thus heat dissipation is performed for the motor driving element (for example, the FET), remarkably improved heat dissipation performance can be expected compared to an air-cooled heat dissipation technology using a conventional heating plate or an indirect liquid-cooled heat dissipation technology using a conventional heat pipe.

### [Description of Drawings]

FIG. 1 is a block diagram illustrating a configuration of a motor control device of a typical motor-driven power steering system for a vehicle.
FIG. 2 is an embodiment illustrating a configuration of a liquid immersion cooling apparatus for a motor-driven power steering system of a vehicle according to the present invention.
FIG. 3 is an embodiment for describing a control operation of a circulation pump controller illustrated in FIG. 2.
FIG. 4 is a graph for describing the control operation of the circulation pump controller illustrated in (c) of FIG. 3.

### [Best Mode]

Hereinafter, embodiments of the present invention will be described in more detail with reference to the accompanying drawings.

A liquid immersion cooling apparatus for a motor-driven power steering system of a vehicle according to the present invention described below is not limited to the following embodiments, and the technical spirit thereof extends to a range in which those of ordinary skill in the art can carry out the invention with modifications without departing from the gist of the technology claimed in the claims.

Referring to FIG. 2, a liquid immersion cooling apparatus 100 for a motor-driven power steering system of a vehicle according to the present invention is used for the motor-driven power steering system 100' for a vehicle (see FIG. 1) that is formed to include the handwheel sensor 110', the electric steering motor 120', and the steering controller 130', and is formed to include a liquid immersion tank 110, a cooling tank 120, the immersion refrigerant circulation pump 130, and a circulation pump controller 140.

Referring to FIG. 1, the handwheel sensor 110' is formed as a TOS that detects only a handwheel torque when a steering angle of the handwheel 111' is adjusted by a driver, or is formed as a TAS that detects both the steering angle and the handwheel torque.

The electric steering motor 120' is driven by a driving signal for adjusting a motor current and generates an assist force for rotationally operating the handwheel 111'.

When the steering controller 130' receives a vehicle speed signal, the handwheel torque detected by the handwheel sensor 110' or both the steering angle and the handwheel torque, and a motor current signal or a motor RPM signal detected from the electric steering motor 120', the steering controller 130' outputs the driving signal for adjusting the motor current applied to the electric steering motor 120' based on a handwheel torque value and a motor current value that are classified in advance for steering angle adjustment according to a vehicle speed range.

The steering controller 130' is an ECU for steering control and is formed as a circuit board on which the sensor 131', the MCU 132', the power connector (POWER) 133', the CAN communication interface (CAN I/F) 134', and the motor driver 135' are mounted.

The sensor 131' senses a detection signal of the handwheel sensor 110' and the motor current signal or the motor RPM signal detected from the electric steering motor 120'.

The MCU 132' outputs a motor current adjustment signal applied to the electric steering motor 120' based on the handwheel torque value and the motor current value that are classified in advance for steering angle adjustment according to the above-described vehicle speed range.

The power connector 133' receives driving power (VCC) supplied from a battery of the vehicle.

The CAN communication interface 134' receives the vehicle speed signal required for steering control through vehicle CAN communication.

The motor driver 135' is formed to include a motor driving element, for example, an FET, that converts electricity supplied from the battery of the vehicle into a low-voltage/high-current driving signal and outputs the driving signal according to an input of the motor current adjustment signal of the MCU 132', and is mounted on the circuit board that forms the steering controller 130'.

The liquid immersion tank 110 immerses the motor driver mounted on the circuit board that forms the steering controller 130'.

The cooling tank 120 stores an immersion refrigerant.

The immersion refrigerant circulation pump 130 circulates the immersion refrigerant contained in the cooling tank 120 such that the immersion refrigerant is supplied to the liquid immersion tank 110 and is then discharged from the liquid immersion tank 110.

The circulation pump controller 140 circulates the immersion refrigerant by operating the immersion refrigerant circulation pump 130, and as a result of matching and comparing an electric steering motor driving value that is calculated using the handwheel torque detected from the handwheel sensor 110' or an electric steering motor driving value that is calculated using the driving signal applied to the electric steering motor 120' with predetermined motor heating values, when it is determined that the electric steering motor driving value exceeds a motor heating threshold value, the circulation pump controller 140 drives the immersion refrigerant circulation pump 130 to circulate the refrigerant, brings the immersion refrigerant into direct contact with the motor driving element (for example, the FET) of the motor driver immersed in the liquid immersion tank 110, and thus performs heat dissipation for the motor driving element (for example, the FET).

The circulation pump controller 140 may be mounted on the circuit board that forms the steering controller 130' as an ECU for steering control or may be mounted on an independent circuit board different from the circuit board that forms the ECU for steering control.

The liquid immersion cooling apparatus 100 for the motor-driven power steering system of the vehicle according to the present invention, which is formed as described above, operates as follows.

In the motor-driven power steering system 100' for the vehicle in which the liquid immersion cooling apparatus 100 for the motor-driven power steering system of the vehicle according to the present invention is used, when the steering controller 130' outputs a driving signal for adjusting a motor current as described above, the electric steering motor 120' is driven to generate an assist force for rotationally operating the handwheel 111', and the assist force thus generated allows the wheels of the vehicle to be easily steered according to an intent of the driver.

Meanwhile, when the motor driver 135' converts electricity supplied from the battery of the vehicle into the low-voltage/high-current driving signal and outputs the driving signal according to the input of the motor current adjustment signal of the MCU 132' and the electric steering motor 120' is driven, particularly the motor driving element (for example, the FET) mounted on the circuit board forming the steering controller 130' overheats.

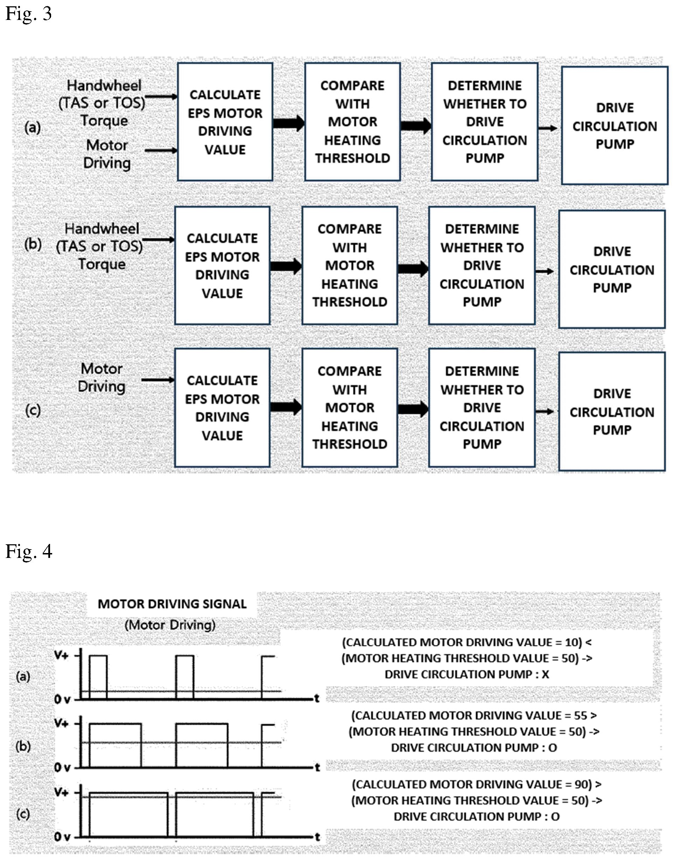

Accordingly, in order to execute heat dissipation for the motor driving element (for example, the FET), the circulation pump controller 140 performs control operations as illustrated in (a), (b), and (c) of FIG. 3 to drive the immersion refrigerant circulation pump 130 and circulate the refrigerant.

### (Embodiment 1)

Embodiment 1 is an embodiment in which, by the control operation illustrated in (a) of FIG. 3, the circulation pump controller 140 drives the immersion refrigerant circulation pump 130 to circulate the refrigerant, brings the immersion refrigerant into direct contact with the motor driving element (for example, the FET) of the motor driver 135' immersed in the liquid immersion tank 110, and thus performs heat dissipation for the motor driving element (for example, the FET).

As a result of matching and comparing an electric steering motor driving value that is calculated using a handwheel torque detected from the handwheel sensor 110' and an electric steering motor driving value that is calculated using a driving signal applied to the electric steering motor 120' with predetermined motor heating values, when it is determined that the electric steering motor driving value exceeds a motor heating threshold value, the circulation pump controller 140 drives the immersion refrigerant circulation pump 130 to circulate the refrigerant.

Embodiment 1 is an embodiment in which both the electric steering motor driving value that is calculated using the above-described handwheel torque and the electric steering motor driving value that is calculated using the driving signal applied to the electric steering motor 120' are used.

### (Embodiment 2)

Embodiment 2 is an embodiment in which, by the control operation illustrated in (b) of FIG. 3, the circulation pump controller 140 drives the immersion refrigerant circulation pump 130 to circulate the refrigerant, brings the immersion refrigerant into direct contact with the motor driving element (for example, the FET) of the motor driver 135' immersed in the liquid immersion tank 110, and thus performs heat dissipation for the motor driving element (for example, the FET).

As a result of matching and comparing only an electric steering motor driving value that is calculated using a handwheel torque detected from the handwheel sensor 110' with predetermined motor heating values, when it is determined that the electric steering motor driving value exceeds a motor heating threshold value, the circulation pump controller 140 drives the immersion refrigerant circulation pump 130 to circulate the refrigerant.

Embodiment 2 is an embodiment in which only the electric steering motor driving value that is calculated using the above-described handwheel torque is used.

### (Embodiment 3)

Embodiment 3 is an embodiment in which, by the control operation illustrated in (c) of FIG. 3, the circulation pump controller 140 drives the immersion refrigerant circulation pump 130 to circulate the refrigerant, brings the immersion refrigerant into direct contact with the motor driving element (for example, the FET) of the motor driver 135' immersed in the liquid immersion tank 110, and thus performs heat dissipation for the motor driving element (for example, the FET).

As a result of matching and comparing only an electric steering motor driving value that is calculated using a driving signal applied to the electric steering motor 120' with predetermined motor heating values, when it is determined that the electric steering motor driving value exceeds a motor heating threshold value, the circulation pump controller 140 drives the immersion refrigerant circulation pump 130 to circulate the refrigerant.

Embodiment 3 is an embodiment in which only the electric steering motor driving value that is calculated using the driving signal applied to the electric steering motor 120' is used, and here, the circulation pump controller 140 measures a PWM signal pulse width of the driving signal applied to the electric steering motor 120' to calculate the electric steering motor driving value.

As described above, when the PWM signal pulse width of the driving signal applied to the electric steering motor 120' is measured to calculate the electric steering motor driving value, the electric steering motor driving value is determined according to a magnitude of the pulse width, and this is proportional to an amount of current applied to the electric steering motor 120' and is also proportional to a heating value of the electric steering motor 120'.

FIG. 4 is a graph for describing the control operation of the circulation pump controller 140 illustrated in (c) of FIG. 3.

As illustrated in (a) of FIG. 4, when a motor heating threshold value is 50 and an electric steering motor driving value that is calculated by measuring a PWM signal pulse width of a driving signal applied to the electric steering motor 120' is 10, the circulation pump controller 140 does not drive the immersion refrigerant circulation pump 130.

This case corresponds to a state in which a motor driving element (for example, an FET) of the motor driver 135' is not overheated.

In contrast, as illustrated in (b) of FIG. 4, when the motor heating threshold value is 50 and the electric steering motor driving value that is calculated by measuring the PWM signal pulse width of the driving signal applied to the electric steering motor 120' is 55, the circulation pump controller 140 drives the immersion refrigerant circulation pump 130, brings an immersion refrigerant into direct contact with the motor driving element (for example, the FET) of the motor driver 135', and thus performs heat dissipation for the motor driving element (for example, the FET).

This case corresponds to a state in which the motor driving element (for example, the FET) of the motor driver 135' is overheated to a level similar to the motor heating threshold value.

In contrast, as illustrated in (c) of FIG. 4, when the motor heating threshold value is 50 and the electric steering motor driving value that is calculated by measuring the PWM signal pulse width of the driving signal applied to the electric steering motor 120' is 90, the circulation pump controller 140 drives the immersion refrigerant circulation pump 130, brings the immersion refrigerant into direct contact with the motor driving element (for example, the FET) of the motor driver 135', and thus performs heat dissipation for the motor driving element (for example, the FET).

This case corresponds to a state in which the motor driving element (for example, the FET) of the motor driver 135' is overheated to a level considerably higher than the motor heating threshold value, and it is preferable to circulate the immersion refrigerant for a relatively longer time than in the case of (b) of FIG. 4.

As is seen from the above description, according to the present invention, because an immersion refrigerant comes into direct contact with a motor driving element (for example, an FET) of the motor driver 135' and heat dissipation is performed for the motor driving element (for example, the FET), remarkably improved heat dissipation performance may be expected compared to an air-cooled heat dissipation technology using a conventional heating plate or an indirect liquid-cooled heat dissipation technology using a conventional heat pipe.

## Claims

1. A liquid immersion cooling apparatus for a motor-driven power steering system of a vehicle, the liquid immersion cooling apparatus being used for a motor-driven power steering system 100' of a vehicle comprising: a handwheel sensor 110' formed as a torque only sensor (TOS) that detects only a handwheel torque when a steering angle of a handwheel 111' is adjusted by a driver or formed as a torque and angle sensor (TAS) that detects both the steering angle and the handwheel torque; an electric steering motor 120' that is driven by a driving signal for adjusting a motor current and generates an assist force for rotationally operating the handwheel 111'; and a steering controller 130' that, upon receiving a vehicle speed signal, the handwheel torque detected by the handwheel sensor 110' or both the steering angle and the handwheel torque, and a motor current signal or a motor revolutions per minute (RPM) signal detected from the electric steering motor 120', outputs a driving signal for adjusting the motor current applied to the electric steering motor based on a handwheel torque value and a motor current value that are classified in advance for steering angle adjustment according to a vehicle speed range,
wherein a motor driver mounted on a circuit board that forms the steering controller 130' is immersed in a liquid immersion tank 110, and an immersion refrigerant contained in a cooling tank 120 is circulated by operating an immersion refrigerant circulation pump 130, and
as a result of matching and comparing an electric steering motor driving value that is calculated using the handwheel torque detected from the handwheel sensor 110' and an electric steering motor driving value that is calculated using the driving signal applied to the electric steering motor 120' with predetermined motor heating values, when it is determined that the electric steering motor driving value exceeds a motor heating threshold value, a circulation pump controller 140 drives the immersion refrigerant circulation pump 130 to circulate the refrigerant, brings the immersion refrigerant into direct contact with a motor driving element of the motor driver immersed in the liquid immersion tank 110, and thus performs heat dissipation for the motor driving element.

2. The liquid immersion cooling apparatus for the motor-driven power steering system of the vehicle of claim 1, wherein the circulation pump controller 140 drives the immersion refrigerant circulation pump 130 to circulate the refrigerant when it is determined, as a result of matching and comparing only the electric steering motor driving value that is calculated using the handwheel torque detected from the handwheel sensor 110' with the predetermined motor heating values, that the electric steering motor driving value exceeds the motor heating threshold value.

3. The liquid immersion cooling apparatus for the motor-driven power steering system of the vehicle of claim 1, wherein the circulation pump controller 140 drives the immersion refrigerant circulation pump 130 to circulate the refrigerant when it is determined, as a result of matching and comparing only the electric steering motor driving value that is calculated using the driving signal applied to the electric steering motor 120' with the predetermined motor heating values, that the electric steering motor driving value exceeds the motor heating threshold value.

4. The liquid immersion cooling apparatus for the motor-driven power steering system of the vehicle of claim 3, wherein the circulation pump controller 140 calculates the electric steering motor driving value by measuring a PWM signal pulse width of the driving signal applied to the electric steering motor 120'.

5. The liquid immersion cooling apparatus for the motor-driven power steering system of the vehicle of claim 1, wherein the circulation pump controller 140 is mounted on the circuit board that forms the steering controller 130' as an electronic control unit (ECU) for steering control.

6. The liquid immersion cooling apparatus for the motor-driven power steering system of the vehicle of claim 1, wherein the circulation pump controller 140 is mounted on an independent circuit board different from the circuit board that forms the steering controller 130' as an ECU for steering control.
